# DEMANDE DE BREVET EUROPEEN

(11) **EP 4 216 386 A1**
(43) Date de publication de la demande: **26.07.2023**
(21) Numéro de dépôt: 23153128.6
(22) Date de dépôt: 24.01.2023
(51) Int. Cl.: H02H 1/06, H02H 3/33, H02H 3/46

(54) **APPAREIL DE PROTECTION D'UNE INSTALLATION ÉLECTRIQUE EN COURANTS ALTERNATIF ET/OU CONTINU**

(30) Priorité: 25.01.2022 FR 2200641
(71) Demandeur: Legrand France, 87000 Limoges (FR); Legrand SNC, 87000 Limoges (FR)
(72) Inventeur: SANTUCCI, Bastien, 06300 NICE (FR); MASSE, Dany, 06250 MOUGINS (FR)
(74) Mandataire: Santarelli

(57) **Abrégé**

Appareil électrique de protection différentielle pour la détection de courants de défaut dans une installation électrique, comportant un module de coupure (5) comportant un relais de coupure (6), un premier module (7) de détection d'un premier type de courant de défaut, un deuxième module (8) de détection d'au moins un deuxième type de courant de défaut, avec ledit premier module qui comporte un sous-module accumulateur (11) d'énergie électrique disposé en amont dudit module de coupure, et ledit deuxième module qui est connecté électriquement en sortie, à une entrée auxiliaire (112) dudit sous-module accumulateur d'énergie dudit premier module ; grâce à quoi ledit sous-module accumulateur d'énergie électrique est configuré pour accumuler de l'énergie électrique provenant aussi bien dudit premier module que dudit deuxième module en vue de faire déclencher ledit relais de coupure en cas de courant de défaut détecté par ledit premier module et/ou par ledit deuxième module.

## Description

### Domaine technique de l'invention

L'invention a trait au domaine de la sécurité électrique.

En particulier, l'invention concerne les appareils électriques de protection des installations électriques en courant alternatif et/ou en courant continu.

Par exemple, il peut s'agir d'un appareil de protection différentielle configuré pour couper une alimentation électrique vers une installation électrique en entrée de laquelle est monté cet appareil, en cas de défaut électrique détecté par cet appareil.

### Etat de la technique

Pour protéger une installation électrique en courants alternatif et/ou continu, il existe des appareils électriques de protection, souvent appelés par exemple disjoncteurs différentiels ou interrupteurs différentiels.

Généralement, ces appareils sont configurés pour détecter soit des courants de défaut dans une alimentation en courant alternatif, soit des courants de défaut dans une alimentation en courant continu.

Il existe aussi des appareils configurés pour détecter des courants de défaut générés aussi bien dans une alimentation en courant alternatif que dans une alimentation en courant continu.

Par exemple, un tel appareil est connu du brevet européen 3 300 542. En particulier, il s'agit d'un appareil comportant deux modules de détection indépendants entre eux, l'un étant apte à détecter des courants de défaut dans une alimentation en courant alternatif et l'autre étant apte à détecter des courants de défaut dans une alimentation en courant continu, et un relais de coupure connecté électriquement et indépendamment à chacun des deux modules de détection et configuré pour être déclenché par l'un ou l'autre et des modules de détection.

### Exposé de l'invention

L'invention vise à fournir un appareil électrique de protection d'un genre similaire, qui soit particulièrement simple, commode et économique.

L'invention propose à cet effet un appareil électrique de protection différentielle pour la détection de courants de défaut dans une installation électrique alimentée par au moins deux conducteurs de phase d'un réseau ou par au moins un conducteur de phase et un conducteur de neutre d'un réseau, ledit appareil comportant :
- un module de coupure comportant un relais de coupure configuré pour être déclenché en cas de courant de défaut détecté par ledit appareil ;
- un premier module de détection d'un premier type de courant de défaut, connecté électriquement audit module de coupure ;
- un deuxième module de détection d'au moins un deuxième type de courant de défaut, dépendant d'une alimentation dudit deuxième module de détection et connecté électriquement audit module de coupure ; avec ledit premier module de détection d'un premier type de courant de défaut qui comporte un sous-module accumulateur d'énergie électrique disposé en amont dudit module de coupure, caractérisé en ce que ledit deuxième module de détection d'au moins un deuxième type de courant de défaut est connecté électriquement en sortie, à une entrée auxiliaire dudit sous-module accumulateur d'énergie dudit premier module de détection d'un premier type de courant de défaut ;
grâce à quoi ledit sous-module accumulateur d'énergie électrique est configuré pour accumuler de l'énergie électrique provenant aussi bien dudit premier module de détection d'un premier type de courant de défaut que dudit deuxième module de détection d'au moins un deuxième type de courant de défaut en vue de faire déclencher ledit relais de coupure dudit module de coupure en cas de courant de défaut détecté par ledit premier module de détection et/ou par ledit deuxième module de détection.

Dans l'appareil selon l'invention, le deuxième module de détection est raccordé électriquement au premier module de détection au niveau du sous-module accumulateur d'énergie électrique de ce premier module. En d'autres termes, le premier module et le deuxième module ne sont pas indépendants l'un de l'autre.

En particulier, dans l'appareil selon l'invention, le sous-module accumulateur d'énergie électrique du premier module de détection est configuré pour accumuler de l'énergie électrique aussi bien lorsqu'un courant de défaut d'un premier type est détecté par le premier module que lorsqu'un courant de défaut d'un deuxième type est détecté par le deuxième module. Autrement dit, le sous-module accumulateur d'énergie électrique est commun au premier module de détection et au deuxième module de détection.

Dans l'appareil selon l'invention, le module de coupure est connecté électriquement à l'unique sous-module accumulateur d'énergie électrique et son relais de coupure peut ainsi être déclenché du fait de l'énergie accumulée provenant soit du premier module de détection, soit du deuxième module de détection, soit des deux cumulés.

Dans l'appareil selon l'invention, le deuxième module de détection d'au moins un deuxième type de courant de défaut est dépendant d'une alimentation en ce sens qu'il nécessite, pour être opérationnel, d'être alimenté électriquement par une source dite externe, elle-même connectée électriquement par exemple par un conducteur de phase. Au contraire, le premier module de détection ne nécessite pas une telle alimentation dite externe car il est opérationnel en s'alimentant directement avec une énergie électrique générée du fait du courant de défaut du premier type.

Des caractéristiques préférées particulièrement simples, commodes et économiques du dispositif selon l'invention sont présentées ci-dessous.

Le premier type de courant de défaut peut être un courant alternatif présentant une fréquence comprise entre environ 50 Hertz et au moins 1000 Hertz et le deuxième type de courant de défaut peut être un courant continu ou un courant alternatif présentant une fréquence inférieure à environ 200 Hertz.

En d'autres termes, le premier module de détection d'un premier type de courant de défaut peut être assimilé à une protection différentielle au moins du type normalisé dit A, AC ou équivalent, tandis que le deuxième module de détection d'un deuxième type de courant de défaut peut être assimilé à une protection différentielle au moins du type normalisé B ou équivalent.

On notera que le premier module de détection d'un premier type de courant de défaut peut en outre être assimilé à une protection différentielle au moins du type normalisé dit F en plus du type normalisé dit A, AC ou équivalent ; tandis que le deuxième module de détection d'un deuxième type de courant de défaut peut en outre être assimilé à une protection différentielle au moins du type normalisé dit A, AC et/ou F en plus du type normalisé dit B.

Lorsque le courant de défaut est un courant alternatif présentant une fréquence comprise à la fois dans la plage de fréquences du premier type de courant de défaut et du deuxième type de courant de défaut, le défaut est détecté par chacun des modules de détection, et le sous-module accumulateur d'énergie reçoit de l'énergie provenant de chacun de ces modules. Le cas échéant, l'appareil est capable de déclencher rapidement le relais de coupure du module de coupure.

Le deuxième module de détection peut comporter un sous-module d'excitation comprenant par exemple un tore, un sous-module oscillateur, un sous-module intégrateur et un sous-module comparateur, ledit sous-module d'excitation étant traversé par au moins certains desdits conducteurs dudit réseau, ledit sous-module d'excitation étant connecté électriquement, en sortie, audit sous-module oscillateur, ledit sous-module oscillateur étant connecté électriquement, en sortie, audit sous-module intégrateur, ledit sous-module intégrateur étant connecté électriquement, en sortie, audit sous-module comparateur, ledit deuxième module de détection étant configuré pour générer, en sortie dudit sous-module comparateur, un signal électrique de sortie représentatif d'un courant de défaut du deuxième type, lequel signal électrique est acheminé jusqu'à ladite entrée auxiliaire dudit sous-module accumulateur d'énergie électrique dudit premier module de détection.

Le sous-module oscillateur peut être configuré pour fournir un signal électrique d'entrée dit d'excitation audit sous-module d'excitation, ledit signal électrique d'entrée étant du type carré.

En cas de présence d'un courant de défaut du deuxième type, le signal électrique d'entrée, ou signal d'excitation du type carré, présente un rapport cyclique qui est modulé par un courant différentiel correspondant au courant de défaut.

Le sous-module oscillateur peut comporter un montage multivibrateur astable et un montage suiveur, ledit montage suiveur comportant une entrée connectée électriquement à l'alimentation dudit deuxième module de détection et une sortie connectée électriquement à une entrée dudit montage multivibrateur astable, lequel montage multivibrateur astable comporte une autre entrée et une sortie connectées électriquement audit sous-module d'excitation.

Le sous-module oscillateur peut comporter un montage multivibrateur astable comportant un amplificateur opérationnel et un montage push-pull, ledit montage push-pull comportant une entrée connectée électriquement à une sortie dudit amplificateur opérationnel et une sortie connectée électriquement audit sous-module d'excitation.

Le sous-module intégrateur peut comporter une entrée connectée électriquement à une sortie dudit sous-module oscillateur et une sortie connectée électriquement à une entrée dudit sous-module comparateur, ledit sous-module intégrateur formant un filtre passe-bas ayant une fréquence de coupure dont la valeur est inférieure ou égale à 1/10^{ème} de la valeur de fréquence d'un signal d'excitation dudit sous-module d'excitation.

Le sous-module comparateur peut comporter une entrée connectée électriquement à une sortie du sous-module intégrateur et une sortie connectée électriquement à une entrée du sous-module à ladite entrée auxiliaire dudit sous-module accumulateur du premier module de détection, ledit sous-module comparateur comportant un montage comparateur à fenêtre, un montage du type « OU » et un montage temporisateur, ledit montage temporisateur comportant une entrée connectée électriquement à l'alimentation dudit deuxième module et une sortie connectée électriquement à une entrée dudit montage comparateur à fenêtre, lequel montage comparateur à fenêtre comportant une autre entrée connectée électriquement à une sortie dudit sous-module intégrateur et une sortie connectée électriquement à une entrée dudit montage du type « OU », lequel montage du type « OU » étant configuré pour générer, en sortie, ledit signal électrique de sortie représentatif d'un courant de défaut du deuxième type.

Le deuxième module de détection peut comporter un sous-module détecteur de défaillance comportant une entrée connectée électriquement à l'alimentation dudit deuxième module, une autre entrée connectée électriquement à une sortie dudit sous-module comparateur et une sortie connectée électriquement à ladite entrée auxiliaire du sous-module accumulateur dudit premier module de détection, ledit sous-module détecteur de défaillance étant configuré pour que, lorsqu'une tension d'alimentation dudit deuxième module est supérieure ou égale à une tension seuil prédéterminée, ladite sortie dudit sous-module comparateur est connectée électriquement à ladite entrée auxiliaire du sous-module accumulateur dudit premier module de détection et, lorsque ladite tension d'alimentation est inférieure à une tension seuil prédéterminée, ladite sortie dudit sous-module comparateur est connectée électriquement à un pôle de référence de l'alimentation dudit deuxième module.

Le premier module de détection peut comporter un sous-module transformateur, par exemple un tore, un sous-module de filtrage et un sous-module de déclenchement, ledit sous-module transformateur étant traversé par au moins certains desdits conducteurs dudit réseau et étant connecté, en sortie, audit sous-module de filtrage, ledit sous-module de filtrage étant connecté, en sortie, audit sous-module accumulateur, ledit sous-module accumulateur étant connecté, en sortie, audit sous-module de déclenchement, lequel sous-module de déclenchement est connectée électriquement, en sortie, audit module de coupure.

### Brève description des figures

On va maintenant poursuivre l'exposé de l'invention par la description d'un exemple de réalisation, donnée ci-après à titre illustratif et non limitatif, en référence aux dessins annexés :
- la figure 1 représente schématiquement et partiellement un appareil électrique de protection différentielle selon l'invention ;
- la figure 2 est une représentation schématique et détaillée d'un premier module de détection d'un premier type de courant de défaut que comporte l'appareil électrique selon l'invention ; et
- la figure 3 est une représentation schématique et détaillée d'un deuxième module de détection d'un deuxième type de courant de défaut que comporte l'appareil électrique selon l'invention.

### Description détaillée

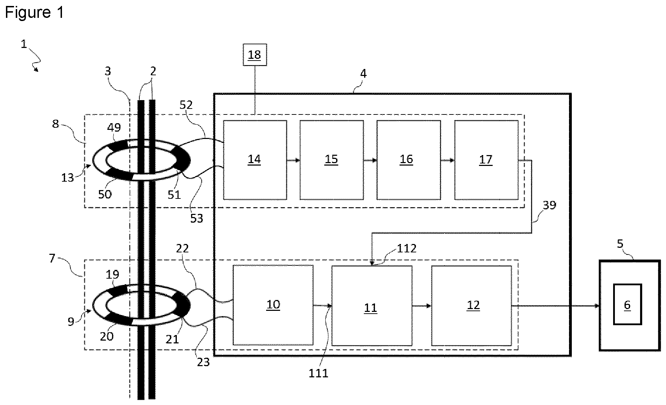

La figure 1 représente de manière schématique un appareil électrique 1 de protection différentielle d'une installation électrique en courant alternatif et/ou en courant continu. Une telle installation est alimentée par au moins deux conducteurs de phase 2 d'un réseau ou par au moins un conducteur de phase 2 et un conducteur de neutre 3 d'un réseau.

L'appareil électrique 1 comporte une carte électronique 4 et un module de coupure 5 relié à la carte électronique 4. Le module de coupure 5 comporte un relais de coupure 6 configuré pour être déclenché en cas de courant de défaut détecté par l'appareil électrique 1.

L'appareil électrique 1 comporte un premier module 7 de détection d'un premier type de courant de défaut et un deuxième module 8 de détection un deuxième type de courant de défaut.

Le premier type de courant de défaut est par exemple un courant alternatif présentant une fréquence comprise entre environ 50 Hertz et au moins 1000 Hertz tandis que le deuxième type de courant de défaut est par exemple un courant continu ou un courant alternatif présentant une fréquence inférieure à environ 200 Hertz.

Comme visible sur la figure 1, le premier module 7 de détection est connectée électriquement, en sortie, au module de coupure 5.

Le premier module 7 de détection est ici un module de protection différentielle du type normalisé dit A, AC et F. Le deuxième module 8 de détection est ici un module de protection différentielle du type normalisé dit B.

En variante, le deuxième module de détection peut, en outre du type B, être aussi du type normalisé dit A et/ou AC et/ou F ; ou le premier module de détection peut être seulement du type normalisé dit A et AC et le deuxième module de détection du type normalisé dit B et F.

Le premier module 7 de détection comporte ici en série un sous-module transformateur 9, un sous-module de filtrage 10, un sous-module accumulateur d'énergie électrique 11 et un sous-module déclencheur 12.

Le sous-module transformateur 9 est connecté électriquement, en sortie, au module-module de filtrage 10.

Le sous-module de filtrage 10 est connecté électriquement, en sortie, au sous-module accumulateur 11 et en particulier à une entrée dite principale 111 du module accumulateur 11.

Le sous-module accumulateur 11 comporte aussi une entrée dite auxiliaire 112 qui est ici distincte de l'entrée principale 111. En variante, l'entrée principale 111 et l'entrée auxiliaire 112 peuvent former une seule entrée du module accumulateur 11.

Le sous-module accumulateur 11 est connecté électriquement, en sortie, au sous-module déclencheur 12.

Le sous-module déclencheur 12 est connecté électriquement, en sortie, au module de coupure 5.

Dans l'exemple illustré, le sous-module transformateur 9 n'est pas sur la carte électronique 4 tandis que le sous-module de filtrage 10, le sous-module accumulateur 11 et le sous-module déclencheur 12 sont disposés sur la carte électronique 4.

Le transformateur 9 comporte ici une armature annulaire (circuit magnétique), aussi appelée tore, autour de laquelle sont effectués un enroulement 19 formé par l'un des au moins deux conducteurs de phase 2 du réseau ou par l'un de l'au moins un conducteur de phase 2 et le conducteur de neutre 3 du réseau, un enroulement 20 formé par l'autre des au moins deux conducteurs de phase 2 du réseau ou par l'autre de l'au moins un conducteur de phase 2 et le conducteur de neutre 3 du réseau.

Le transformateur 9 comporte, en outre de l'enroulement 19 et de l'enroulement 20, qui forment les enroulements primaires, un enroulement secondaire 21.

Une première extrémité de l'enroulement secondaire 21 est reliée par un conducteur 22 à un premier point de raccordement d'entrée du sous-module de filtrage 10 et une seconde extrémité de l'enroulement secondaire 21 est reliée par un conducteur 23 à un second point de raccordement d'entrée du sous-module de filtrage 10.

L'enroulement secondaire 21 du transformateur 9 fournit une tension alternative en cas de différence entre une intensité circulant dans l'enroulement 19 et une intensité circulant dans l'enroulement 20, c'est-à-dire en présence d'un courant de défaut d'un premier type.

Le sous-module transformateur 9 est ainsi configuré pour générer une tension alternative en présence d'un courant de défaut du premier type.

La tension alternative existant aux extrémités de l'enroulement secondaire 21 est représentative de l'intensité du courant de défaut circulant dans les enroulements primaires 19 et 20.

On notera que le premier module 7 de détection, pour être opérationnel, est alimenté directement par une énergie électrique générée dans le transformateur 9 du fait du courant de défaut. Le premier module 7 de détection n'est pas connecté à une alimentation par exemple externe. En d'autres termes, le premier module 7 de détection s'autoalimente dès lors qu'un courant de défaut apparaît en entrée de ce premier module 7.

Cette tension est filtrée par le sous-module de filtrage 10 et convertie par le sous-module accumulateur 11 en tension continue.

En outre de convertir la tension alternative existant aux extrémités de l'enroulement secondaire 21 en tension continue, le sous-module accumulateur 11 accumule de l'énergie électrique provenant notamment de l'enroulement secondaire 21 du sous-module transformateur 9.

Grâce à cette accumulation d'énergie électrique, le sous-module accumulateur 11 peut fournir au sous-module de déclenchement 12 l'énergie électrique nécessaire au déclenchement du relais de coupure 6 du module de coupure 5.

Le module de déclenchement 12 est configuré pour fixer une valeur d'énergie électrique de référence pour l'alimentation du module de coupure 5, et donc pour le déclenchement du relais de coupure 6.

En pratique, cette valeur de référence est déterminée en fonction de la sensibilité de l'appareil 1, c'est-à-dire de l'intensité du courant différentiel de déclenchement, et de la caractéristique temps-courant que doit avoir cet appareil, c'est-à-dire de la valeur et la durée du courant de défaut du premier type pour lesquelles le relais de coupure 6 doit être déclenché.

Le deuxième module 8 de détection est connecté électriquement au module de coupure 5 et est dépendant d'une alimentation 18 du deuxième module.

En particulier, le deuxième module 8 de détection est connecté indirectement au module de coupure 5 via le sous-module accumulateur d'énergie électrique 11 et le sous-module déclencheur 12 du premier module 7 de détection.

En outre et contrairement au premier module 7 de détection, le deuxième module 8 de détection est quant à lui dépendant d'une alimentation 18 dite externe du deuxième module, qui est elle-même connectée électriquement à au moins l'un des conducteurs de phase 2 du réseau.

Dans l'exemple illustré, le premier module 7 et le deuxième module 8 sont tous les deux disposés sur la carte électronique 4. En variante, l'appareil peut par exemple comporter deux cartes électroniques sur lesquels sont disposés respectivement le premier module 7 et le deuxième module 8, ou différents sous-modules de l'un ou de l'autre en fonction de l'agencement général de l'appareil.

Le deuxième module 8 de détection comporte en série un sous-module d'excitation 13, un sous-module oscillateur 14, un sous-module intégrateur 15, un sous-module comparateur 16 et un sous-module détecteur de défaillance 17.

Le sous-module d'excitation 13 est connecté électriquement, en sortie, au sous-module oscillateur 14

Le sous-module oscillateur 14 est connecté électriquement, en sortie, au sous-module intégrateur 15

Le sous-module intégrateur 15 est connecté électriquement, en sortie, au sous-module comparateur 16.

Le sous-module comparateur 16 est connecté électriquement, en sortie, au sous-module détecteur de défaillance 17.

Le sous-module détecteur de défaillance 17 est connecté électriquement, en sortie, à l'entrée auxiliaire 112 du sous-module accumulateur d'énergie électrique 11 du premier module 7 de détection par un conducteur 39.

Plus généralement, le deuxième module 8 de détection est connecté électriquement, en sortie, à l'entrée auxiliaire 112 du sous module accumulateur d'énergie électrique 11 par le conducteur 39.

Dans l'exemple illustré, le sous-module d'excitation 13 n'est pas sur la carte électronique 4 tandis que le sous-module oscillateur 14, le sous-module intégrateur 15, le sous-module comparateur 16 et le sous-module détecteur de défaillance 17 sont disposés sur la carte électronique 4.

Le sous-module d'excitation 13 comporte une armature annulaire (circuit magnétique), aussi appelée tore, autour de laquelle sont effectués un enroulement 49 formé par l'un des au moins deux conducteurs de phase 2 du réseau ou par l'un de l'au moins un conducteur de phase 2 et le conducteur de neutre 3 du réseau, un enroulement 50 formé par l'autre des au moins deux conducteurs de phase 2 du réseau ou par l'autre de l'au moins un conducteur de phase 2 et le conducteur de neutre 3 du réseau.

Le sous-module d'excitation 13 comporte, en outre de l'enroulement 49 et de l'enroulement 50, qui forment les enroulements primaires, un enroulement secondaire 51.

Dans la présente description, le sous-module oscillateur 14 est représenté distinctement du sous-module d'excitation 13 mais fonctionnellement, la fonction d'excitation inclut le tore et le sous-module oscillateur 14. Autrement dit, il est possible de considérer que le sous-module oscillateur 14 fait partie du sous-module module d'excitation 13, comme le tore.

Une première extrémité de l'enroulement secondaire 51 est reliée par un conducteur 52 à un point de raccordement d'entrée du sous-module oscillateur 14. Une seconde extrémité de l'enroulement secondaire 51 est reliée par un conducteur 53 à un premier point de raccordement de sortie du sous-module oscillateur 14.

L'enroulement secondaire 51 reçoit un signal électrique d'entrée, dit d'excitation, fournit par le sous-module oscillateur 14 pour exciter à saturation l'armature annulaire du sous-module d'excitation 13.

En présence d'un courant de défaut du deuxième type, l'armature annulaire présente une hystérésis magnétique ayant une symétrie qui est rompue. Il en résulte une dissymétrie qui est ici représentative d'une intensité du courant de défaut circulant dans les enroulements primaires 49 et 50.

Le signal d'excitation est ici un signal alternatif du type carré présentant un rapport cyclique prédéterminé, par exemple de 50%.

En présence d'un courant de défaut du deuxième type, la saturation du tore du sous-module d'excitation 13 module le rapport cyclique du signal d'excitation. La différence entre le rapport cyclique prédéterminé et le rapport cyclique modulé par la saturation du tore du sous-module d'excitation 13 est représentative de l'intensité du courant de défaut circulant dans les enroulements primaires 49 et 50.

Le sous-module d'excitation 13 est ainsi configuré pour moduler le rapport cyclique du signal d'excitation en présence d'un courant de défaut.

Cette méthode de détection des courants de défaut du deuxième type est basée sur une méthode connue dite « Fluxgate ». En variante, d'autres méthodes de détection des courants de défaut du deuxième type peuvent être envisagées. Par exemple, il est possible d'appliquer un signal sinusoïdal fixe au sous-module d'excitation et de traiter une déformation de ce signal en cas d'apparition d'un courant différentiel. Il est également de détecter les courants de défauts du deuxième type par effet Néel ou effet Hall.

Le sous-module oscillateur 14 est configuré pour fournir le signal d'excitation au sous-module d'excitation 13 et au sous-module intégrateur 15.

Le sous-module intégrateur 15 sert ici à supprimer la composante alternative du signal d'excitation et à récupérer uniquement la composante continue. Le sous-module intégrateur joue donc le rôle d'un filtre dit passe-bas.

Le sous-module intégrateur 15 fournit ainsi en sortie un signal représentatif de la moyenne du signal d'excitation.

Afin que le signal représentatif de la moyenne ne soit pas déformé, il est nécessaire qu'une fréquence de coupure du filtre passe-bas formé par le sous-module intégrateur 15 ait une valeur inférieure ou égale à 10 fois la valeur de fréquence du signal d'excitation du sous-module d'excitation 13.

Si le signal représentatif de la moyenne du signal d'excitation du est au-dessus d'un premier seuil prédéterminé ou en-dessous d'un second seuil prédéterminé, le sous-module comparateur 16 génère alors un signal électrique de sortie représentatif d'un courant de défaut du deuxième type.

En pratique, ces seuils sont déterminés en fonction de la sensibilité de l'appareil 1, c'est-à-dire de la valeur du courant de défaut du deuxième type pour lesquelles le relais de coupure 6 doit être déclenché.

Par exemple, un signal d'excitation variant entre 0V et 24V avec un rapport cyclique prédéterminé de 50% fournit un signal continu de 12V en sortie du sous-module intégrateur 15. Si le relais de coupure 6 doit être déclenché pour un courant de défaut du deuxième type d'une valeur de 40 mA, et en considérant qu'une telle valeur de courant de défaut module le rapport cyclique prédéterminé de plus ou moins 4% selon la polarité du courant de défaut, les seuils sont fixés respectivement à 11V et 13V.

Le sous-module comparateur 16 est ainsi configuré pour générer un signal électrique de sortie en présence d'un courant de défaut du deuxième type.

Le sous-module de détection de défaillance 17 sert ici à éviter qu'un signal électrique de sortie fourni par le sous-module comparateur 16 soit transmis au sous-module accumulateur 11 lorsque la tension d'alimentation délivrée par l'alimentation 18 est inférieure à une tension d'alimentation seuil prédéterminée. Une telle baisse de la tension d'alimentation, se produisant par exemple à la coupure de l'alimentation, peut conduire à une baisse de la moyenne du signal d'excitation et à la fourniture d'un signal électrique de sortie par le sous-module comparateur 16.

Dans la suite de la description, les sous-modules seront désignés par le terme les caractérisant, par exemple le sous-module transformateur sera simplement désigné par le terme transformateur, afin de faciliter la lecture.

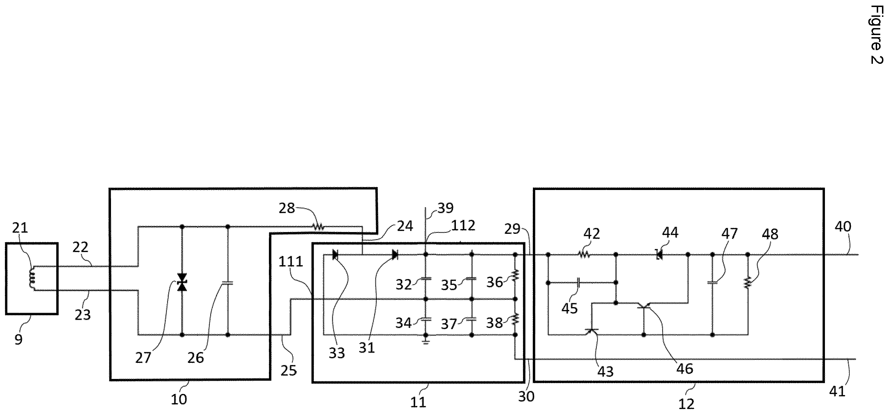

On va maintenant décrire plus en détail le premier module 7 de détection, et en particulier le sous-module de filtrage 10, l'accumulateur 11 et le déclencheur 12 à l'appui de la figure 2.

Le sous-module de filtrage 10 présente deux points de raccordement d'entrée et deux points de raccordement de sortie.

Un point de raccordement d'entrée du sous-module de filtrage 10 est relié au conducteur 22 et l'autre point de raccordement d'entrée est relié au conducteur 23.

Un point de raccordement de sortie est relié à un conducteur 24 et l'autre point de raccordement de sortie est relié à un conducteur 25.

Le sous-module de filtrage 10 comporte successivement entre ses points de raccordement d'entrée et ses points de raccordement de sortie, un condensateur 26, une diode de suppression de tension transitoire 27 (par exemple dite Transil^{®}) qui est ici bidirectionnelle et une résistance 28.

La résistance 28 est disposée en série entre le point d'entrée du sous-module de filtrage 10 auquel est relié le conducteur 22 et le point de sortie du sous-module de filtrage auquel est relié le conducteur 24. Une première borne de la résistance 28 est reliée au point de raccordement d'entrée du sous-module de filtrage 10 auquel est relié le conducteur 22, la seconde borne de la résistance 28 est reliée au point de raccordement de sortie du sous-module de filtrage 10 auquel est relié le conducteur 24.

Le condensateur 26 est reliée par une première borne au point d'entrée du sous-module de filtrage 10 auquel est relié le conducteur 22, ainsi qu'à la première borne de la seconde résistance 28. Une deuxième borne du condensateur 27 est reliée au point d'entrée du sous-module de filtrage 10 auquel est relié le conducteur 23, ainsi qu'au point de sortie du sous-module de filtrage 10 auquel est relié le conducteur 25.

La diode de suppression de tension transitoire 27 est disposée en parallèle du condensateur 26. Une première borne de la diode de suppression de tension transitoire 27 est reliée au point d'entrée du sous-module de filtrage 10 auquel est relié le conducteur 22 et à la première borne de la résistance 28. Une deuxième borne de la diode de suppression de tension transitoire 27 est reliée au point d'entrée du sous-module de filtrage 10 auquel est relié le conducteur 23, au point de sortie du sous-module de filtrage 10 auquel est relié le conducteur 25, et à la deuxième borne du condensateur 26.

Le condensateur 26 et la diode de suppression de tension transitoire 27 sont ainsi disposés en parallèle de l'enroulement secondaire 21 du transformateur 9.

L'enroulement secondaire 21 formant une inductance, ou bobine, ensemble avec le condensateur 26, forment un circuit LC résonant, c'est-à-dire qu'à une fréquence dite de résonnance, la présence d'un champ magnétique dans l'enroulement secondaire 21 induit un courant électrique chargeant le condensateur 26 qui, en se déchargeant, produit un courant électrique renforçant le champ magnétique dans l'enroulement secondaire 21.

Cela permet ici au sous-module de filtrage 10 d'amplifier la tension aux extrémités de l'enroulement secondaire 21 à la fréquence de résonnance. Comme décrit plus en détail dans la suite de la description, une valeur de tension prédéterminée est nécessaire pour déclencher le relais de coupure 6.

Ainsi, en amplifiant la tension aux extrémités de l'enroulement secondaire 21, le sous-module de filtrage 10 permet d'agir sur les temps de déclenchement du relais de coupure 6.

Le condensateur 26 et la résistance 28 forment ici un filtre passe-bas qui sert à atténuer des fréquences supérieures à un seuil de fréquence prédéterminé.

La diode de suppression de tension transitoire 27 protège le premier module 7 de détection lorsqu'une surintensité extrême se produit dans l'un des conducteurs de phase 2 du réseau, notamment en raison d'un transitoire ou d'un court-circuit dans l'installation raccordée à l'appareil électrique 1, la surintensité extrême dans l'un des enroulements primaires 19 et 20 générant une surtension extrême aux extrémités de l'enroulement secondaire 21.

L'accumulateur 11 présente trois points de raccordement d'entrée et deux points de raccordement de sortie.

Un premier et un deuxième point de raccordement d'entrée sont reliés respectivement au conducteur 24 et au conducteur 25 pour que l'accumulateur 11 soit soumis à la tension alternative filtrée sortant du sous-module de filtrage 10, qui est représentative du courant de défaut circulant dans l'un des enroulements primaires 19 et 20 et donc dans les conducteurs 2 alimentant l'installation. Ces points de raccordement d'entrée forment l'entrée principale de l'accumulateur 11.

Un troisième point de raccordement d'entrée de l'accumulateur 11 est relié au conducteur 39 et forme ainsi l'entrée auxiliaire 112 de l'accumulateur 11.

Un premier point de raccordement de sortie de l'accumulateur 11, est relié à un conducteur 29, tandis que le deuxième point de raccordement de sortie est relié à un conducteur 30.

L'accumulateur 11 comporte une première diode 31, un premier condensateur 32, une deuxième diode 33 et un deuxième condensateur 34.

Une anode de la diode 31 est reliée au point de raccordement d'entrée de l'accumulateur 11 auquel est relié le conducteur 24. Une cathode de la diode 31 est reliée au point de raccordement de sortie de l'accumulateur 11 auquel est relié le conducteur 29, au point de raccordement d'entrée de l'accumulateur 11 auquel est relié le conducteur 39 et à l'une des bornes du condensateur 32.

L'autre borne du condensateur 32 est reliée au point de raccordement d'entrée de l'accumulateur 11 auquel est relié le conducteur 25 ainsi qu'à l'une des bornes du condensateur 34. L'autre borne du condensateur 34 est reliée à une anode de la diode 33 et au point de raccordement de sortie de l'accumulateur 11 auquel est relié le conducteur 30. Une cathode de la diode 33 est reliée à l'anode de la diode 31 et donc au conducteur 24.

Les diodes 31 et 33 ainsi que les condensateurs 32 et 34 forment ici un pont redresseur et doubleur de tension de LATOUR.

L'accumulateur 11 comporte un condensateur d'accumulation 35 et une résistance 36 disposés en parallèle du condensateur 32 ainsi qu'un autre condensateur d'accumulation 37 et une autre résistance 38 disposés en parallèle du condensateur 34.

Les condensateurs d'accumulation 35 et 37 permettent ici à l'accumulateur 11 d'accumuler de l'énergie électrique provenant notamment du sous-module de filtrage 10, et donc de l'enroulement secondaire 21 du transformateur 9.

Les condensateurs d'accumulation 35 et 37 se déchargent via les résistances 36 et 38 qui sont ainsi utiles à la présence d'une tension aux points de raccordement de sortie de l'accumulateur 11.

Les condensateurs d'accumulation 35 et 37 sont notamment chargés via la résistance 28 du sous-module de filtrage 10.

L'accumulateur 11, en jouant le rôle de doubleur de tension, permet au premier module 7 de détection de fonctionner, c'est-à-dire de faire déclencher le module de coupure 5, avec une tension relativement faible entre les deux extrémités de l'enroulement secondaire 21 du transformateur 9.

Ainsi qu'expliqué ci-après plus en détail, les condensateurs d'accumulation 32 et 34 sont également chargés par le deuxième module 8 de détection en cas de courant de défaut détecté par le deuxième module 8 de détection.

L'accumulateur 11 est ainsi configuré pour accumuler de l'énergie électrique provenant aussi bien du premier module 7, en particulier du sous-module de filtrage 10, que du deuxième module 8 en vue de faire déclencher le relais de coupure 6 dudit module de coupure 5 en cas de courant de défaut détecté par le premier module 7 et/ou par le deuxième module 8.

En variante, l'accumulateur 11 peut être dépourvu du condensateur d'accumulation 35 et du condensateur d'accumulation 37.

Le déclencheur 12 présente deux points de raccordement d'entrée et deux points de raccordement de sortie.

Les deux points de raccordement d'entrée sont reliés respectivement au conducteur 29 pour que le déclencheur 12 soit soumis à l'énergie électrique accumulée dans l'accumulateur 11, et au conducteur 30.

Un premier point de raccordement de sortie du déclencheur 12 est relié par un conducteur électrique 40 à un premier point de raccordement du module de coupure 5.

Un deuxième point de raccordement de sortie du déclencheur 12 est relié par un conducteur 41 à un autre point de raccordement du module de coupure 5.

Le déclencheur 12 comporte une première résistance 42, un premier transistor 43, une diode Zener 44, un premier condensateur 45, un second transistor 46, un second condensateur 47 et une seconde résistance 48.

Une première borne de la résistance 42 est reliée au point de raccordement d'entrée du déclencheur 12 auquel est relié le conducteur 29 et à un émetteur du transistor 43.

Une deuxième borne de la résistance 42 est reliée à une base du transistor 43 et à une cathode de la diode 44 dont une anode est reliée au point de raccordement de sortie du déclencheur 12 auquel est relié le conducteur 40 et à une première borne de la résistance 48.

Une deuxième borne de la résistance 48 est reliée à un collecteur du transistor 43 et à une base du transistor 46.

Le condensateur 47 est disposé en parallèle de la résistance 48. Une première borne du condensateur 47 est reliée à l'anode de la diode 44 ainsi qu'au point de raccordement de sortie du déclencheur 12 auquel est relié le conducteur 40, et une deuxième borne du condensateur 47 est reliée au collecteur du transistor 43 et à la base du transistor 46.

Le transistor 46 est disposé en parallèle de la diode 44. Un collecteur du transistor 46 est relié à la cathode de la diode 44 ainsi qu'à la base du transistor 43, et un émetteur du transistor 46 est relié à l'anode de la diode 44 ainsi qu'au point de raccordement de sortie du déclencheur 12 auquel est relié le conducteur 40.

Le condensateur 45 est disposé en parallèle de la résistance 42. Une première borne du condensateur 45 est reliée au point de raccordement d'entrée du déclencheur 12 auquel est relié le conducteur 29 ainsi qu'à la première borne de la résistance 42, tandis qu'une deuxième borne du condensateur 45 est reliée à la deuxième borne de la résistance 42, au collecteur du transistor 46 et à la base du transistor 43.

Comme indiqué ci-dessus, l'accumulateur 11 fournit au déclencheur 12 une tension dépendante de l'énergie électrique accumulée dans les condensateurs 32, 34, 35 et 37 soit du premier module 7, soit du deuxième module 8, soit des deux cumulés. Lorsque cette tension atteint un seuil prédéterminé entraînant un effet d'avalanche de la diode Zener 44, cette dernière génère un courant inverse, c'est-à-dire qui traverse la diode Zener 44 depuis la cathode vers l'anode.

En présence du courant inverse, le transistor 43 est passant entre son collecteur et son émetteur, ce qui fait apparaitre un signal à la base du transistor 46 qui devient passant à son tour entre son collecteur et son émetteur.

Les résistances 42 et 48 et les condensateurs 43 et 47 servent ici à empêcher que des courants parasites n'activent la base du transistor 43 et/ou du transistor 46.

Les transistors 43 et 46 forment ici un circuit fonctionnant de manière analogue à un thyristor du fait de la disposition du transistor 43 par rapport au transistor 46. Le transistor 46 reste ainsi passant dès lors qu'il a été activé par le transistor 43, qui reste lui aussi passant une fois activé par le courant inverse généré par la diode Zener 44.

Lorsque le transistor 46 est passant entre son collecteur et son émetteur, la diode Zener 44 est en court-circuit et la tension dépendante de l'énergie accumulée dans l'accumulateur 11 alimente le module de coupure 5 via le point de raccordement de sortie du déclencheur 12 auquel est relié le conducteur 40, en traversant le transistor 46.

C'est donc ici la diode Zener 44 qui fixe la valeur de référence pour l'alimentation du module de coupure 5, et donc le déclenchement du relais de coupure 6.

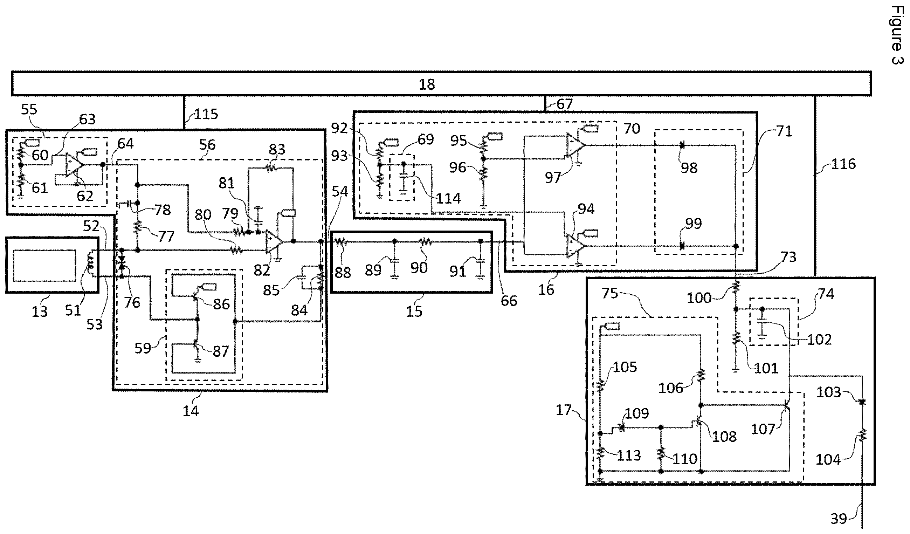

On va maintenant décrire l'agencement du deuxième module 8 de détection, et en particulier de ses oscillateur 14, intégrateur 15, comparateur 16 et détecteur de défaillance 17 à l'appui de la figure 3.

L'oscillateur 14 présente deux points de raccordement d'entrée et deux points de raccordement de sortie.

Un premier point de raccordement d'entrée de l'oscillateur 14 est relié à l'alimentation 18 du deuxième module 8 par un conducteur 115.

Un premier point de raccordement de sortie de l'oscillateur 14 est relié à un conducteur 54.

Un deuxième point de raccordement d'entrée et un deuxième point de raccordement de sortie de l'oscillateur 14 sont reliés respectivement au sous-module d'excitation 13 par le conducteur 52 et le conducteur 53.

L'oscillateur 14 comporte entre ses points de raccordement d'entrée et ses points de raccordement de sortie un montage suiveur 55, un montage multivibrateur astable 56 et un montage push-pull 59.

Le montage suiveur 55 présente deux points de raccordement d'entrée et un point de raccordement de sortie.

Les points de raccordement d'entrée du montage suiveur 55 sont reliés à l'alimentation 18 du deuxième module 8

Pour ce faire, un conducteur relie chacun des points de raccordement d'entrée du montage suiveur 55 au point de raccordement d'entrée de l'oscillateur 14 auquel est relié le conducteur 115.

Le point de raccordement de sortie du montage suiveur 55 est relié à un conducteur 64.

Le montage suiveur 55 sert ici à adapter les impédances et permet notamment d'utiliser à sa sortie de plus petites résistances qu'en l'absence d'un tel montage. Cela permet ainsi de réduire la consommation en énergie électrique de l'oscillateur 14.

Le montage multivibrateur astable 56 présente quatre points de raccordement d'entrée et deux points de raccordement de sortie.

Un premier et un deuxième point de raccordement d'entrée du montage multivibrateur astable 56 sont reliés à l'alimentation 18 du deuxième module 8

Pour ce faire, un conducteur relie chacun des premier et deuxième points de raccordement d'entrée du montage multivibrateur astable 56 au point de raccordement d'entrée de l'oscillateur 14 auquel est relié le conducteur 115.

Un troisième point de raccordement d'entrée et un premier point de raccordement de sortie du montage multivibrateur astable 56 sont reliés à l'enroulement secondaire 51 du sous-module d'excitation 13 pour que le montage multivibrateur astable 56 soit soumis à la tension alternative aux extrémités de l'enroulement secondaire 51, qui est représentative du courant de défaut du deuxième type circulant dans les enroulements primaires 49 et 50.

Pour ce faire, un conducteur relie le troisième point de raccordement d'entrée du montage multivibrateur astable 56 au point de raccordement d'entrée de l'oscillateur 14 auquel est relié le conducteur 52 et un autre conducteur relie le premier point de raccordement de sortie du montage multivibrateur astable 56 au point de raccordement de sortie de l'oscillateur 14 auquel est relié le conducteur 53.

Le quatrième point de raccordement d'entrée du montage multivibrateur astable 56 est relié au conducteur 64.

Le deuxième point de raccordement de sortie du montage multivibrateur astable 56 est relié au point de raccordement de sortie de l'oscillateur 14 auquel est relié le conducteur 54.

Le montage multivibrateur astable 56 est ici configuré pour fournir à ses points de raccordement de sortie, un signal électrique périodique rectangulaire évoluant entre deux états stables et dont le rapport cyclique est modulé par le signal électrique provenant de son troisième point de raccordement d'entrée.

Le montage multivibrateur astable 56 comporte ici un amplificateur opérationnel 82 et un montage push-pull 59. En variante, l'amplificateur opérationnel du montage multivibrateur astable peut être remplacé par un ou plusieurs transistors.

Le montage push-pull 59 présente deux points de raccordement d'entrée et un point de raccordement de sortie.

Un premier point de raccordement d'entrée du montage push-pull 59 est relié à l'alimentation 18 du deuxième module 8.

Pour ce faire, un conducteur relie le premier point de raccordement d'entrée du montage push-pull 59 au point de raccordement d'entrée de l'oscillateur 14 auquel est relié le conducteur 115.

Un deuxième point de raccordement d'entrée du montage push-pull 59 est relié à une sortie de l'amplificateur opérationnel 82.

Le point de raccordement de sortie du montage push-pull 59 est relié au premier point de raccordement de sortie du multivibrateur astable 56 qui est relié au point de raccordement de sortie de l'oscillateur 14 auquel est relié le conducteur 53.

En pratique, le signal périodique carré sortant de l'amplificateur opérationnel 82, appelé signal d'excitation ci-dessus, n'est pas parfaitement carré.

Le montage push-pull 59 sert ici à redresser de potentiels arrondis afin d'obtenir des fronts nets, c'est-à-dire que le temps de passage d'un premier état stable à un second état stable est réduit grâce au montage push-pull 59, dans le but d'améliorer la précision du traitement du signal.

L'intégrateur 15 présente un point de raccordement d'entrée relié au conducteur 54 et un point de raccordement de sortie relié à un conducteur 66.

Le signal d'excitation sortant du montage multivibrateur astable 56 est convertie en tension continue par l'intégrateur 15.

Le comparateur 16 présente deux points de raccordement d'entrée et un point de raccordement de sortie.

Un premier point de raccordement d'entrée du comparateur 16 est relié à l'alimentation 18 du deuxième module 8 par un conducteur 67.

Un deuxième point de raccordement d'entrée du comparateur 16 est relié au conducteur 66.

Le point de raccordement de sortie du comparateur 16 est relié à un conducteur 73.

Le comparateur 16 comporte entre ses points de raccordement d'entrée et son point de raccordement de sortie un montage comparateur à fenêtre 70 et un montage du type « OU » 71.

Le montage comparateur à fenêtre 70 présente cinq points de raccordement d'entrée et deux points de raccordement de sortie.

Un premier, un deuxième, un troisième et un quatrième point de raccordement d'entrée du montage comparateur à fenêtre 70 sont reliés à l'alimentation du deuxième module 8.

Pour ce faire, un conducteur relie ces quatre des points de raccordement d'entrée du montage comparateur à fenêtre 70 au premier point de raccordement d'entrée du comparateur 16 auquel est relié le conducteur 67.

Le cinquième point de raccordement d'entrée du montage comparateur à fenêtre 70 est relié au deuxième point de raccordement d'entrée du comparateur 16 auquel est relié le conducteur 66.

Les deux points de raccordement de sortie du montage comparateur à fenêtre 70 sont respectivement reliés à deux points de raccordement d'entrée du montage du type « OU » 71.

Le montage comparateur à fenêtre 70 réalise ici une fonction de comparateur à fenêtre et fournit respectivement un signal de dépassement du premier seuil prédéterminé et un signal de dépassement du deuxième seuil prédéterminé à ses points de raccordement de sortie.

Ici, les signaux de dépassement fournis aux points de raccordement de sortie du montage comparateur à fenêtre 70 sont la tension d'alimentation du deuxième module 8.

Si la tension continue en sortie du sous-module intégrateur 15 est au-dessus du premier seuil prédéterminé, le montage comparateur à fenêtre 70 fournit un signal de dépassement du premier seuil prédéterminé. Si la tension continue sortant du sous-module intégrateur 15 est au-dessus du deuxième seuil prédéterminé, le montage comparateur à fenêtre 70 fournit un signal de dépassement du deuxième seuil prédéterminé.

Le montage du type « OU » 71 présente deux points de raccordement d'entrée et un point de raccordement de sortie.

Le point de raccordement de sortie du montage du type « OU » 71 est relié à un conducteur 73.

Le montage du type « OU » 71 réalise ici une fonction d'une porte logique du type « OU », c'est-à-dire qu'un un signal, dit de sortie ci-dessus, est fourni au point de raccordement de sortie du montage du type « OU » 71 lorsque l'un ou l'autre du signal de dépassement du premier seuil prédéterminé et du signal de dépassement du deuxième seuil prédéterminé est fourni par le montage comparateur à fenêtre 70. Lorsqu'aucun signal de dépassement n'est fourni, le montage du type « OU » 71 ne fournit pas de signal de sortie.

Le détecteur de défaillance 17 présente deux points de raccordement d'entrée et un point de raccordement de sortie.

Un premier point de raccordement d'entrée du détecteur de défaillance 17 est relié au conducteur 73.

Un deuxième point de raccordement d'entrée du détecteur de défaillance 17 est relié à l'alimentation du deuxième module 8 par un conducteur 116.

Le point de raccordement de sortie du détecteur de défaillance 17 est relié au conducteur 39.

Le détecteur de défaillance 17 comporte ici entre ses points de raccordement d'entrée et son point de raccordement de sortie un montage temporisateur 74 et un montage détecteur de défaillance de tension 75.

Le montage détecteur de défaillance de tension 75 présente deux points de raccordement d'entrée.

Un premier point de raccordement d'entrée du montage détecteur de défaillance de tension 75 est relié au premier point de raccordement d'entrée du détecteur de défaillance 17 auquel est relié le connecteur 73 et au point de raccordement de sortie du détecteur de défaillance 17.

Un deuxième point de raccordement d'entrée du montage détecteur de défaillance de tension 75 est relié par un conducteur au deuxième point de raccordement d'entrée du détecteur de défaillance 17 auquel est connecté le conducteur 116.

Le montage temporisateur 74 présente un point de raccordement d'entrée et un point de raccordement de sortie.

Le point de raccordement d'entrée du montage temporisateur 74 est relié au premier point de raccordement d'entrée du détecteur de défaillance 17 auquel est relié le conducteur 73 et au pôle de référence de l'alimentation du deuxième module 8.

Le point de raccordement de sortie du montage temporisateur 74 est relié au premier point de raccordement d'entrée du montage détecteur de défaillance de tension 75 et au point de raccordement de sortie du détecteur de défaillance 17.

Le montage temporisateur 74 est ici configuré pour retarder l'arrivée du signal électrique de sortie au point de raccordement de sortie du sous-module détecteur de défaillance 17 afin de ne pas faire déclencher le module de coupure 5 lorsque des ondes transitoires apparaissent au niveau des enroulements primaires 49 et 50 du sous-module d'excitation 13.

On va maintenant décrire plus en détail chacun des composants du deuxième module 8 de détection, et en particulier de ses oscillateur 14, intégrateur 15, comparateur 16 et détecteur de défaillance 17 toujours à l'appui de la figure 3.

Le montage suiveur 55 comporte entre son point de raccordement d'entrée et son point de raccordement de sortie une première résistance 60, une deuxième résistance 61 et un amplificateur opérationnel 62.

Une première borne de la résistance 60 est reliée au point d'entrée du montage suiveur 55 tandis qu'une deuxième borne est reliée à une première borne de la résistance 61. Une deuxième borne de la résistance 61 est reliée au pôle de référence de l'alimentation du deuxième module 8.

La première résistance 60 et la deuxième résistance 61 forment un pont diviseur de tension entre l'alimentation 18 du deuxième module 8 et le pôle de référence de l'alimentation. Une tension de sortie du pont diviseur de tension se trouve entre les bornes de la résistance 61 et donc entre le point de référence de l'alimentation et un conducteur 63 qui est relié à la deuxième borne de la résistance 60, à la première borne de la résistance 61 ainsi qu'à une entrée positive de l'amplificateur opérationnel 62.

Une borne d'alimentation positive de l'amplificateur opérationnel 62 est reliée à l'alimentation 18 du deuxième module 8. Une borne d'alimentation négative de l'amplificateur opérationnel 62 est reliée au pôle de référence de l'alimentation. Une sortie de l'amplificateur opérationnel 62 est reliée à une entrée négative de l'amplificateur opérationnel 62 et au point de raccordement de sortie du montage suiveur 55.

Puisque l'amplificateur opérationnel 62 présente une impédance très élevée, de l'ordre du mégaohm en entrée et très faible de l'ordre de la dizaine de ohm en sortie, il est possible d'utiliser des impédances élevées en entrée de l'amplificateur opérationnel 62 afin de réduire la consommation de l'oscillateur tout en utilisant des impédances plus faibles en sortie de de l'amplificateur opérationnel 62 sans provoquer de chute de tension entre l'entrée et la sortie de l'amplificateur opérationnel 62.

Le montage multivibrateur astable 56 comporte ici entre ses points de raccordement d'entrée et ses points de raccordement de sortie une diode de suppression de tension transitoire 76 (par exemple dite Transil^{®}), une première résistance 77, un premier condensateur 78, une deuxième résistance 79, une troisième résistance 80, un deuxième condensateur 81, un amplificateur opérationnel 82, une quatrième résistance 83, une cinquième résistance 84 et un troisième condensateur 85.

Une borne d'alimentation positive de l'amplificateur opérationnel 82 est reliée à l'alimentation du deuxième module 8 tandis qu'une borne d'alimentation négative de l'amplificateur opérationnel 82 est reliée au pôle de référence de l'alimentation.

La diode de suppression de tension transitoire 76 en disposée en parallèle de l'enroulement secondaire 61 du sous-module d'excitation 13. Une première borne de la diode de suppression de tension transitoire 76 est reliée au point de raccordement d'entrée du montage multivibrateur astable 56 auquel est relié le conducteur 52, à une première borne de la résistance 80 dont une deuxième borne est reliée à une entrée négative de l'amplificateur opérationnel 82, ainsi qu'à une première borne de la résistance 77.

Une deuxième borne de la résistance 77 est reliée à une première borne du condensateur 78 dont une deuxième borne est reliée au pôle de référence de l'alimentation du deuxième module 8, au quatrième point de raccordement d'entrée du montage multivibrateur astable 56 auquel est relié le conducteur 64, ainsi qu'à une première borne de la résistance 79.

Une deuxième borne de la résistance 79 est reliée à une première borne du condensateur 81 dont une deuxième borne est reliée au pôle de référence de l'alimentation du deuxième module 8, à une entrée positive de l'amplificateur opérationnel 82, et à une première borne de la résistance 83.

Une deuxième borne de la résistance 83 est reliée à une sortie de l'amplificateur opérationnel 82 et à une première borne de la résistance 84.

Une deuxième borne de la résistance 84 est reliée au point de raccordement d'entrée du montage push-pull 59.

Le condensateur 85 est disposé en parallèle de la résistance 84. Une première borne du condensateur 85 est reliée à la deuxième borne de la résistance 83, à la sortie de l'amplificateur opérationnel 82 et à la première borne de la résistance 84, tandis qu'une deuxième borne du condensateur 85 est reliée à la deuxième borne de la résistance 84 et au point de raccordement d'entrée du montage push-pull 59.

Le montage push-pull 59 comporte entre son point de raccordement d'entrée et son point de raccordement de sortie un premier transistor 86 et un second transistor 87.

Une base du transistor 86 est reliée au point de raccordement d'entrée du montage push-pull 59. Un collecteur du transistor 86 est relié à l'alimentation 18 du deuxième module 8. Un émetteur du transistor 86 est relié au point de raccordement de sortie du montage push-pull 59 et à un émetteur du transistor 87.

Une base du transistor 87 est reliée au point de raccordement d'entrée du montage push-pull 59. Un collecteur du transistor 87 est relié au pôle de référence de l'alimentation du deuxième module 8.

Le point de raccordement de sortie du montage push-pull 59 est relié à une deuxième borne de la diode de suppression de tension transitoire 76 et au premier point de raccordement de sortie du montage multivibrateur astable 56 auquel est relié le conducteur 53.

La diode de suppression de tension transitoire 76 sert ici à protéger le deuxième module 8 lorsqu'une surintensité extrême se produit dans l'un des conducteurs de phase 2 du réseau, notamment en raison d'un transitoire ou d'un court-circuit dans l'installation raccordée à l'appareil électrique 1, la surintensité extrême dans l'un des enroulements primaires 49 et 50 générant une surtension extrême aux extrémités de l'enroulement secondaire 51.

L'enroulement secondaire 51 formant une inductance, ou bobine, ensemble avec la résistance 77, forment un circuit RL dont il est possible de calculer le temps d'établissement d'un courant en régime transitoire, c'est-à-dire le temps que met la tension sur l'entrée négative de l'amplificateur opérationnel 82, provenant du module d'excitation 13, à atteindre un seuil de basculement.

Ce temps d'établissement, noté *τ* peut être calculé avec la formule *τ* = *L*/*R,* avec L l'inductance de l'enroulement secondaire 51 et R la valeur de la résistance 77.

Le condensateur 81 sert ici à couper des fréquences supérieures à un seuil de fréquence prédéterminé sur l'entrée positive de l'amplificateur opérationnel 82. Ainsi, le condensateur 81 joue le rôle d'un filtre du type passe-bas sur l'entrée positive de l'amplificateur opérationnel 82.

L'intégrateur 15 comporte entre son point de raccordement d'entrée et son point de raccordement de sortie une première résistance 88, un premier condensateur 89, une deuxième résistance 90 et un deuxième condensateur 91.

Une première borne de la résistance 88 est reliée au point de raccordement d'entrée de l'intégrateur 15.

Une deuxième borne de la résistance 88 est reliée à une première borne du condensateur 89 dont une deuxième borne est reliée au pôle de référence de l'alimentation et à une première borne de la résistance 90.

Une deuxième borne de la résistance 90 est reliée à une première borne du condensateur 91 dont une deuxième borne est reliée au pôle de référence de l'alimentation, et au point de raccordement de sortie de l'intégrateur 15.

Le montage comparateur à fenêtre 70 comporte entre ses points de raccordement d'entrée et ses points de raccordement de sortie une première résistance 92, une deuxième résistance 93, un montage temporisateur 69, un premier amplificateur opérationnel 94, une troisième résistance 95, une quatrième résistance 96 et un deuxième amplificateur opérationnel 97.

Une première borne de la résistance 92 est reliée à un point de raccordement d'entrée du sous-module comparateur à fenêtre 70 auquel est relié le conducteur 67.

Une deuxième borne de la résistance 92 est reliée à une première borne de la résistance 93 dont une deuxième borne est reliée au pôle de référence de l'alimentation et à un point de raccordement d'entrée du montage temporisateur 69.

Un point de raccordement de sortie du montage temporisateur 69 est relié à une entrée positive de l'amplificateur opérationnel 94.

Le module temporisateur 69 comporte entre son point de raccordement d'entrée et son point de raccordement de sortie un condensateur 114.

Une première borne du condensateur 114 est reliée au point de raccordement d'entrée du montage temporisateur 69 et son point de raccordement de sortie du module temporisateur 69. Une deuxième borne du condensateur 114 est reliée au pôle de l'alimentation.

Une borne d'alimentation positive de l'amplificateur opérationnel 94 est reliée à l'alimentation du deuxième module 8. Une borne d'alimentation négative de l'amplificateur opérationnel 94 est reliée au pôle de référence de l'alimentation.

Une entrée négative de l'amplificateur opérationnel 94 est reliée à un point de raccordement d'entrée du montage comparateur à fenêtre 70 auquel est relié le conducteur 66 et à une entrée positive de l'amplificateur opérationnel 97.

Une première borne de la résistance 95 est reliée à un point de raccordement d'entrée du montage comparateur à fenêtre 70 auquel est relié le conducteur 67.

Une deuxième borne de la résistance 95 est reliée à une première borne de la résistance 96 dont une deuxième borne est reliée au pôle de référence de l'alimentation et à une entrée négative de l'amplificateur opérationnel 97.

Une borne d'alimentation positive de l'amplificateur opérationnel 97 est reliée à l'alimentation du deuxième module 8. Une borne d'alimentation négative de l'amplificateur opérationnel 97 est reliée au pôle de référence de l'alimentation.

La résistance 92 et la résistance 93 forment un pont diviseur pour la tension d'alimentation du deuxième module 8.

Le montage temporisateur 69 est ici configuré pour retarder, d'une durée prédéterminée, l'arrivée de la tension d'alimentation du deuxième module 8 sur l'entrée positive de l'amplificateur opérationnel 94, notamment à l'allumage de l'alimentation 18.

Cela permet notamment d'éviter que le montage comparateur à fenêtre 70 fournisse un signal de dépassement du premier seuil prédéterminé avant que le premier seuil de dépassement soit initialisé, c'est-à-dire avant que ce seuil ait atteint sa valeur prédéterminée.

L'amplificateur opérationnel 94 fonctionne en régime de saturation. Si la tension sur l'entrée négative de l'amplificateur opérationnel 94 est inférieure à la tension sur l'entrée positive de l'amplificateur opérationnel 94, la sortie de l'amplificateur opérationnel 94 sature à la tension d'alimentation du deuxième module 8. Si la tension sur l'entrée négative de l'amplificateur opérationnel 94 est supérieure à la tension sur l'entrée positive de l'amplificateur opérationnel 94, la sortie de l'amplificateur opérationnel 94 est au pôle de référence de l'alimentation.

La tension sur la borne positive de l'amplificateur opérationnel 94 fixe donc ici le premier seuil de dépassement prédéterminé. Pour changer le premier seuil de dépassement prédéterminé, il suffit de changer le rapport de division du pont formé par les résistances 92 et 93.

La résistance 95 et la résistance 96 forment un pont diviseur pour la tension d'alimentation du deuxième module 8.

L'amplificateur opérationnel 97 fonctionne ici en régime de saturation. Si la tension sur l'entrée négative de l'amplificateur opérationnel 97 est inférieure à la tension sur l'entrée positive de l'amplificateur opérationnel 97, la sortie de l'amplificateur opérationnel 97 sature à la tension d'alimentation du deuxième module 8. Si la tension sur l'entrée négative de l'amplificateur opérationnel 97 est supérieure à la tension sur l'entrée positive de l'amplificateur opérationnel 97, la sortie de l'amplificateur opérationnel 97 est au pôle de référence de l'alimentation.

La tension sur la borne positive de l'amplificateur opérationnel 97 fixe donc ici le deuxième seuil de dépassement prédéterminé. Pour changer le deuxième seuil de dépassement prédéterminé, il suffit de changer le rapport de division du pont formé par les résistances 95 et 96.

Les signaux de dépassement du premier seuil de dépassement et du deuxième seuil de dépassement correspondent ici à la tension d'alimentation du deuxième module 8.

Le montage du type « OU » 71 comporte entre ses points de raccordement d'entrée et son point de raccordement d'entrée, une première diode 98 et une deuxième diode 99.

Une anode de la première diode 98 est relié à un point de raccordement d'entrée du montage du type « OU » 71. Une cathode de la diode 98 est reliée au point de raccordement de sortie du montage du type « OU » 71 et à une cathode de la diode 99 dont une anode est reliée à un autre point de raccordement d'entrée du montage du type « OU » 71.

Le détecteur de défaillance 17 comporte entre ses points de raccordement d'entrée et son point de raccordement de sortie une première résistance 100, une deuxième résistance 101, le montage temporisateur 74, le montage détecteur de défaillance de tension 75, une diode 103 et une troisième résistance 104.

Une première borne de la résistance 100 est reliée au premier point de raccordement d'entrée du détecteur de défaillance 17 auquel est relié le conducteur 73.

Une seconde borne de la résistance 100 est reliée à une première borne de la résistance 101 dont une deuxième borne est reliée au pôle de référence de l'alimentation, et au point de raccordement d'entrée du module temporisateur 74.

Le module temporisateur 74 comporte entre son point de raccordement d'entrée et son point de raccordement de sortie un condensateur 102.

Une borne du condensateur 102 est reliée au point de raccordement d'entrée du montage temporisateur 74 et son point de raccordement de sortie du module temporisateur 74. Une autre borne du condensateur 102 est reliée au pôle de l'alimentation.

Le point de raccordement de sortie du module temporisateur 74 est relié au premier point de raccordement d'entrée du montage détecteur de défaillance de tension 75 et à une anode de la diode 103 dont une cathode est reliée à une première borne de la résistance 104.

Une seconde borne de la résistance 104 est reliée au point de raccordement de sortie du détecteur de défaillance 17 auquel est relié le conducteur 39.

Le montage détecteur de défaillance de tension 75 comporte entre ses points de raccordement d'entrée et son point de raccordement de sortie une première résistance 105, une deuxième résistance 106, un premier transistor 107, un deuxième transistor 108, une diode Zener 109, une troisième résistance 110, et une quatrième résistance 113.

Une première borne de la résistance 105 est reliée au deuxième point de raccordement d'entrée du montage détecteur de défaillance de tension 75 auquel est relié le conducteur 116, et à une première borne de la résistance 106.

Une deuxième borne de la résistance 106 est reliée à une base du transistor 107 dont un collecteur est relié au premier point de raccordement d'entrée du montage détecteur de défaillance de tension 75 auquel est relié le conducteur 73. Un émetteur du transistor 107 est relié au pôle de référence de l'alimentation, et à un collecteur du transistor 108 dont un émetteur est relié au pôle de référence de l'alimentation.

Une base du transistor 108 est relié à une première borne de la résistance 110 dont une deuxième borne est reliée au pôle de référence de l'alimentation, et à une anode de la diode Zener 109.

Une cathode de la diode Zener 109 est reliée à une seconde borne de la résistance 105 et à une première borne de la résistance 113 dont une deuxième borne est au pôle de référence de l'alimentation.

La résistance 100 et la résistance 101 forment un pont diviseur pour la tension provenant du comparateur 16, c'est-à-dire du signal électrique de sortie. Une tension de sortie du pont diviseur de tension formé par les résistances 100 et 101 correspond ici à une énergie électrique envoyée à l'accumulateur 11 du premier module 7.

La diode 103 sert ici d'anti-retour, c'est-à-dire qu'elle impose un sens de circulation du courant du deuxième module 8 vers le premier module 7.

La résistance 104 sert ici à limiter le courant dans la diode 103.

La résistance 105 et la résistance 113 forment un pont diviseur pour la tension d'alimentation du deuxième module 8. La tension mesurée à la cathode de la diode Zener 109 correspond à la tension de sortie du pont diviseur de tension formé par les résistances 105 et 113. La diode Zener 109 est passante lorsque cette tension atteint un seuil prédéterminé entraînant un effet d'avalanche de la diode Zener 109.

La diode Zener 109 est ainsi passante lorsque la tension d'alimentation est supérieure à un seuil prédéterminé et est bloquée lorsque cette tension est inférieure au seuil prédéterminé. Pour changer ce seuil prédéterminé, il faut changer le rapport de division du pont formé par les résistances 105 et 113.

Si la diode Zener 109 est bloquée, le transistor 108 est bloqué, et le transistor 107 est passant entre son collecteur et son émetteur qui est relié au pôle de référence de l'alimentation. Cela permet de diriger le signal électrique de sortie provenant du comparateur 16 vers l'accumulateur 11 du premier module 7.

Si la diode Zener 109 est passante, le transistor 108 est passant entre son collecteur et son émetteur qui est relié au pôle de référence de l'alimentation, et donc le transistor 107 est bloqué. Cela permet de diriger le signal électrique de sortie provenant du comparateur 16 vers le pôle de référence de l'alimentation et donc de ne pas fournir le signal de sortie à l'accumulateur 11 du premier module 7 lorsque la tension d'alimentation est inférieure à un seuil de tension prédéterminé.

Grâce à l'invention, un appareil électrique de protection différentielle simple, commode et économique peut être fournit, permettant d'accumuler de l'énergie électrique délivrée par un premier module de détection d'un premier type de courant de défaut et/ou un deuxième module de détection d'un deuxième type de courant de défaut dans un même sous-module en vue de déclencher un relais de coupure.

En particulier, il est possible d'utiliser un premier module de détection d'un type de courant de défaut existant qui comporte un sous-module d'accumulation d'énergie électrique et donc de s'abstenir d'un tel sous-module dans le deuxième module de détection d'un autre type de courant de défaut. Ainsi, la compacité de l'appareil électrique selon l'invention peut être améliorée en comparaison d'un appareil comportant deux modules de détection indépendants. En outre, le temps de déclenchement peut aussi être réduit en comparaison d'un appareil comportant deux modules indépendants, en particulier lorsqu'un courant de défaut est détecté par les deux modules de détection, puisque le sous-module d'accumulation reçoit de l'énergie électrique des deux modules.

De nombreuses variantes sont possibles en fonction des circonstances et l'on rappelle à cet égard que l'invention ne se limite pas aux exemples décrits et représentés. En particulier, le montage et les composants décrits en référence aux différents « blocs » illustrés sur les figures 2 et 3 peuvent comporter des variantes de réalisation, sans pour autant sortir du cadre de l'invention revendiquée.

## Revendications

1. Appareil électrique de protection différentielle pour la détection de courants de défaut dans une installation électrique alimentée par au moins deux conducteurs de phase (2) d'un réseau ou par au moins un conducteur de phase (2) et un conducteur de neutre (3) d'un réseau, ledit appareil comportant :
- un module de coupure (5) comportant un relais de coupure (6) configuré pour être déclenché en cas de courant de défaut détecté par ledit appareil ;
- un premier module (7) de détection d'un premier type de courant de défaut, connecté électriquement audit module de coupure (5) ;
- un deuxième module (8) de détection d'au moins un deuxième type de courant de défaut, dépendant d'une alimentation (18) dudit deuxième module (8) et connecté électriquement audit module de coupure (5) ; avec ledit premier module (7) de détection d'un premier type de courant de défaut qui comporte un sous-module accumulateur (11) d'énergie électrique disposé en amont dudit module de coupure (5), **caractérisé en ce que** ledit deuxième module (8) de détection d'au moins un deuxième type de courant de défaut est connecté électriquement en sortie, à une entrée auxiliaire (112) dudit sous-module accumulateur (11) d'énergie dudit premier module (7) de détection d'un premier type de courant de défaut ; grâce à quoi ledit sous-module accumulateur (11) d'énergie électrique est configuré pour accumuler de l'énergie électrique provenant aussi bien dudit premier module (7) de détection d'un premier type de courant de défaut que dudit deuxième module (8) de détection d'au moins un deuxième type de courant de défaut en vue de faire déclencher ledit relais de coupure (6) dudit module de coupure (5) en cas de courant de défaut détecté par ledit premier module (7) de détection et/ou par ledit deuxième module (8) de détection.

2. Appareil électrique selon la revendication 1, **caractérisé en ce que** le premier type de courant de défaut est un courant alternatif présentant une fréquence comprise entre environ 50 Hertz et au moins 1000 Hertz et le deuxième type de courant de défaut est un courant continu ou un courant alternatif présentant une fréquence inférieure à environ 200 Hertz.

3. Appareil selon l'une des revendications 1 ou 2, **caractérisé en ce que** ledit deuxième module (8) de détection d'au moins un deuxième type de courant de défaut comporte un sous-module d'excitation (13), par exemple un tore, un sous-module oscillateur (14), un sous-module intégrateur (15) et un sous-module comparateur (16), ledit sous-module d'excitation (13) étant traversé par au moins certains desdits conducteurs (2, 3) dudit réseau, ledit sous-module oscillateur (14) comportant une entrée connectée électriquement à une sortie dudit sous-module d'excitation (13), ledit sous-module intégrateur (15) comportant une entrée connectée électriquement à une sortie dudit sous-module oscillateur (14), ledit sous-module comparateur (16) comportant une entrée connectée électriquement à une sortie dudit sous-module intégrateur (15), ledit deuxième module (8) de détection étant configuré pour générer, à une sortie dudit sous-module comparateur (16), un signal électrique de sortie représentatif d'un courant de défaut du deuxième type, lequel signal électrique est acheminé jusqu'à ladite entrée auxiliaire (112) dudit sous-module accumulateur (11) d'énergie électrique dudit premier module (7) de détection.

4. Appareil selon la revendication 3, **caractérisé en ce que** ledit sous-module oscillateur (14) est configuré pour fournir un signal électrique d'entrée dit d'excitation audit sous-module d'excitation (13), ledit signal électrique d'entrée étant du type carré.

5. Appareil selon l'une des revendications 3 ou 4, **caractérisé en ce que** ledit sous-module oscillateur (14) comporte un montage multivibrateur astable (56) et un montage suiveur (55), ledit montage suiveur (55) comportant une entrée connectée électriquement à l'alimentation (18) dudit deuxième module (8) de détection et une sortie connectée électriquement à une entrée dudit montage multivibrateur astable (56), lequel montage multivibrateur astable (56) comporte une autre entrée et une sortie connectées électriquement audit sous-module d'excitation (13).

6. Appareil selon l'une quelconques des revendications 3 à 5, **caractérisé en ce que** ledit sous-module oscillateur (14) comporte un montage multivibrateur astable (56) comportant un amplificateur opérationnel (82) et un montage push-pull (59), ledit montage push-pull (59) comportant une entrée connectée électriquement à une sortie dudit amplificateur opérationnel (82) et une sortie connectée électriquement audit sous-module d'excitation (13).

7. Appareil selon l'une quelconque des revendications 3 à 6, **caractérisé en ce que** ledit sous-module intégrateur (15) comporte une entrée connectée électriquement à une sortie dudit sous-module oscillateur (14) et une sortie connecté électriquement à une entrée dudit sous-module comparateur (16), ledit sous-module intégrateur (15) formant un filtre passe-bas ayant une fréquence de coupure dont la valeur est inférieure ou égale à 10 fois la valeur de fréquence d'un signal d'excitation dudit sous-module d'excitation (13).

8. Appareil selon l'une quelconque des revendications 3 à 7, **caractérisé en ce que** ledit sous-module comparateur (16) comporte une entrée connectée électriquement à une sortie du sous-module intégrateur (15) et une sortie connectée électriquement à une entrée du sous-module à ladite entrée auxiliaire (112) dudit sous-module accumulateur (11) du premier module (7) de détection, ledit sous-module comparateur (16) comportant un montage comparateur à fenêtre (70), un montage du type « OU » (71) et un montage temporisateur (69), ledit montage temporisateur (69) comportant une entrée connectée électriquement à l'alimentation (18) dudit deuxième module (8) et une sortie connectée électriquement à une entrée dudit montage comparateur à fenêtre (70), lequel montage comparateur à fenêtre (70) comportant une autre entrée connectée électriquement à une sortie dudit sous-module intégrateur (15) et une sortie connectée électriquement à une entrée dudit montage du type « OU » (71), lequel montage du type « OU » (71) étant configuré pour générer, en sortie, ledit signal électrique de sortie représentatif d'un courant de défaut du deuxième type.

9. Appareil selon l'une quelconque des revendications 3 à 8, **caractérisé en ce que** le deuxième module (8) de détection comporte un sous-module détecteur de défaillance (17) comportant une entrée connectée électriquement à l'alimentation (18) dudit deuxième module, une autre entrée connectée électriquement à une sortie dudit sous-module comparateur (16) et une sortie connectée électriquement à ladite entrée auxiliaire (112) du sous-module accumulateur (11) dudit premier module (7) de détection, ledit sous-module détecteur de défaillance (17) étant configuré pour que, lorsqu'une tension d'alimentation (18) dudit deuxième module (8) est supérieure ou égale à une tension seuil prédéterminée, ladite sortie dudit sous-module comparateur (16) est connectée électriquement à ladite entrée auxiliaire (112) du sous-module accumulateur (11) dudit premier module (7) de détection et, lorsque ladite tension d'alimentation (18) est inférieure à une tension seuil prédéterminée, ladite sortie dudit sous-module comparateur (16) est connectée électriquement à un pôle de référence de l'alimentation (18) dudit deuxième module.

10. Appareil selon l'une quelconque des revendications 1 à 9, **caractérisé en ce que** ledit premier module (7) de détection comporte un sous-module transformateur (9), par exemple un tore, un sous-module de filtrage (10) et un sous-module de déclenchement (12), ledit sous-module transformateur (9) étant traversé par au moins certains desdits conducteurs (2, 3) dudit réseau et étant connecté, en sortie, audit sous-module de filtrage (10), ledit sous-module de filtrage (10) étant connecté, en sortie, audit sous-module accumulateur (11), ledit sous-module accumulateur (11) étant connecté, en sortie, audit sous-module de déclenchement (12), lequel sous-module de déclenchement (12) est connectée électriquement, en sortie, audit module de coupure (5).
